# FASCICULE DE BREVET EUROPEEN

(11) **EP 3 705 705 B1**
(45) Date de publication et mention de la délivrance du brevet: **25.08.2021**
(21) Numéro de dépôt: 20161331.2
(22) Date de dépôt: 05.03.2020
(51) Int. Cl.: F02C 7/36, F16H 57/08, F16H 57/04

(54) **RÉDUCTEUR MÉCANIQUE DE TURBOMACHINE D'AÉRONEF**
MECHANISCHES REDUKTIONSGETRIEBE FÜR LUFTFAHRZEUG-TURBOTRIEBWERK
MECHANICAL GEAR OF AN AIRCRAFT TURBINE ENGINE

(30) Priorité: 07.03.2019 FR 1902311
(43) Date de publication de la demande: 09.09.2020
(73) Titulaire: Safran Aircraft Engines, 75015 Paris (FR); Safran Transmission Systems, 92700 Colombes (FR)
(72) Inventeur: SIMON, Adrien, Louis, 77550 MOISSY-CRAMAYEL (FR); FOGLIA, Matthieu, Bruno, François, 77550 MOISSY-CRAMAYEL (FR)
(74) Mandataire: Gevers & Orès

(56) Documents cités:
- EP-A2- 2 518 279
- EP-A2- 2 554 874
- US-A1- 2013 225 353

## Description

### Domaine technique de l'invention

La présente invention concerne le domaine des réducteurs mécaniques pour des turbomachines en particulier d'aéronef.

### Arrière-plan technique

L'état de l'art comprend notamment les documents WO-A1-2010/092263, FR-A1-2 987 416, FR-A1-3 041 054, EP-A2-2 518 279 et EP-A2-2 554 874.

Le rôle d'un réducteur mécanique est de modifier le rapport de vitesse et de couple entre l'axe d'entrée et l'axe de sortie d'un système mécanique.

Les nouvelles générations de turbomachines à double flux, notamment celles ayant un haut taux de dilution, comportent un réducteur mécanique pour entraîner l'arbre d'une soufflante (aussi appelé « fan »). De manière usuelle, le réducteur a pour but de transformer la vitesse de rotation dite rapide de l'arbre d'une turbine de puissance en une vitesse de rotation plus lente pour l'arbre entraînant la soufflante.

Un tel réducteur comprend un pignon central, appelé solaire, une couronne et des pignons appelés satellites, qui sont en prise entre le solaire et la couronne. Les satellites sont maintenus par un châssis appelé porte-satellites. Le solaire, la couronne et le porte-satellites sont des planétaires car leurs axes de révolution coïncident avec l'axe longitudinal X de la turbomachine. Les satellites ont chacun un axe de révolution différent, ils sont équirépartis sur le même diamètre de fonctionnement autour de l'axe des planétaires. Ces axes sont parallèles à l'axe longitudinal X.

Il existe plusieurs architectures de réducteur. Dans l'état de l'art des turbomachines à double flux, les réducteurs sont de type planétaire ou épicycloïdal. Il existe dans d'autres applications similaires, des architectures dites différentielles ou « compound ».
- Sur un réducteur planétaire, le porte-satellites est fixe et la couronne constitue l'arbre de sortie du dispositif qui tourne dans le sens inverse du solaire.
- Sur un réducteur épicycloïdal, la couronne est fixe et le porte-satellites constitue l'arbre de sortie du dispositif qui tourne dans le même sens que le solaire.
- Sur un réducteur différentiel, aucun élément n'est fixé en rotation. La couronne tourne dans le sens contraire du solaire et du porte-satellites.

Les réducteurs peuvent comprendre un ou plusieurs étages d'engrènement. Cet engrènement est assuré de différentes façons comme par contact, par friction ou encore par champs magnétique. Il existe plusieurs types d'engrènement par contact comme avec des dentures droites ou en chevron.

Un réducteur doit être lubrifié et l'apport d'huile de lubrification aux composants tournants d'un réducteur peut être problématique. L'huile est amenée au réducteur par un distributeur qui comprend une partie statorique immobile en rotation et une partie rotorique solidaire en rotation du porte-satellites lorsque le réducteur est du type épicycloïdal. La partie statorique du distributeur coopère à l'étanchéité avec la partie rotorique, cette étanchéité devant être garantie alors que la partie statorique doit en fonctionnement se déplacer et basculer par rapport au réducteur et suivre les déplacements de la partie rotorique. Dans la technique actuelle, la partie statorique est immobilisée en rotation par liaison bielle à un carter de stator de la turbomachine.

La présente invention propose un perfectionnement simple, efficace et économique à cette technologie.

### Résumé de l'invention

L'invention concerne un porte-satellites pour un réducteur mécanique de turbomachine, en particulier d'aéronef, ce réducteur comportant :
- un solaire ayant un axe de rotation,
- une couronne qui s'étend autour du solaire et qui est configurée pour être immobile en rotation autour dudit axe,
- des satellites qui sont engrenés avec le solaire et la couronne et qui sont maintenus par un porte-satellites qui est configuré pour être mobile en rotation autour dudit axe,
- un distributeur d'huile de lubrification qui comprend une partie statorique immobile en rotation et une partie rotorique solidaire en rotation dudit porte-satellites, et
- au moins un déflecteur d'huile annulaire qui est solidaire de la couronne, caractérisé en ce que ladite partie statorique du distributeur est solidaire dudit déflecteur.

Dans l'état de la technique, le déflecteur a une seule fonction de captation et de guidage de l'huile projetée radialement vers l'extérieur, en vue de son évacuation et son recyclage. Dans la présente invention, le déflecteur a cette fonction et a en outre une autre fonction de maintien de la partie statorique du distributeur afin de limiter les déplacements relatifs et les basculements relatifs entre les parties statorique et rotorique du distributeur en fonctionnement, ce qui permet de garantir une bonne étanchéité entre ces parties notamment.

La solution proposée ci-dessous est compatible d'un réducteur épicycloïdal dont la couronne est fixe dans le repère du moteur. Elle est compatible de tout type de denture (droite, chevron), de tout type de porte-satellites, qu'il soit monobloc ou de type cage-porte / cage, et elle est compatible avec des paliers de satellites composés d'éléments roulants (roulements à billes, à rouleaux, à rouleaux coniques, etc.) ou à paliers hydrodynamiques.

Le réducteur selon l'invention peut comprendre une ou plusieurs des caractéristiques suivantes, prises isolément les unes des autres, ou en combinaison les unes avec les autres :
- le déflecteur comprend une bride annulaire de fixation à une bride annulaire de la couronne,
- la couronne comprend deux demi-couronnes comportant chacune une jante équipée d'une denture et une demi-bride de fixation, les demi-brides de fixation étant fixées ensemble et à la bride du déflecteur,
- la couronne comprend deux demi-couronnes comportant chacune une jante équipée d'une denture et une demi-bride de fixation, la virole étant fixée à la jante de l'une des demi-couronnes ou étant formée d'une seule pièce avec l'une des dem i-couronnes,
- le déflecteur comprend une partie périphérique externe s'étendant autour d'une demi-couronne.
- le déflecteur comprend une partie périphérique interne s'étendant principalement radialement audit axe,
- le déflecteur peut comprendre une rangée annulaire de lumières traversantes,
- le déflecteur comprend une portion tronconique dans laquelle sont formées lesdites lumières,
- ladite partie statorique du distributeur comprend :
   - une surface cylindrique externe comportant des orifices de sortie d'huile et configurée pour coopérer à étanchéité avec ladite partie rotorique du distributeur, et
   - un circuit interne d'huile comportant une cavité annulaire reliée d'une part à des conduites s'étendant principalement axialement et reliant ladite cavité auxdits orifices, et d'autre part à au moins un canal d'alimentation s'étendant principalement radialement depuis ladite cavité.

L'invention concerne en outre une turbomachine, en particulier d'aéronef, comportant un réducteur mécanique tel que décrit ci-dessus.

### Brève description des figures

D'autres caractéristiques et avantages ressortiront de la description qui suit d'un mode de réalisation non limitatif de l'invention en référence aux dessins annexés sur lesquels :
[Fig. 1] la figure 1 est une vue schématique en coupe axiale d'une turbomachine utilisant l'invention,
[Fig. 2] la figure 2 est une vue partielle en coupe axiale d'un réducteur mécanique,
[Fig. 3] la figure 3 est une autre vue partielle en coupe axiale d'un réducteur mécanique, et illustre la technique antérieure à la présente invention,
[Fig. 4] la figure 4 est une autre vue partielle en coupe axiale d'un réducteur mécanique, et illustre la présente invention,
[Fig. 5] la figure 5 est une vue en perspective du réducteur de la figure 4, et
[Fig. 6] la figure 6 est vue similaire à celle de la figure 4 et illustrant une variante de réalisation de invention.

### Description détaillée de l'invention

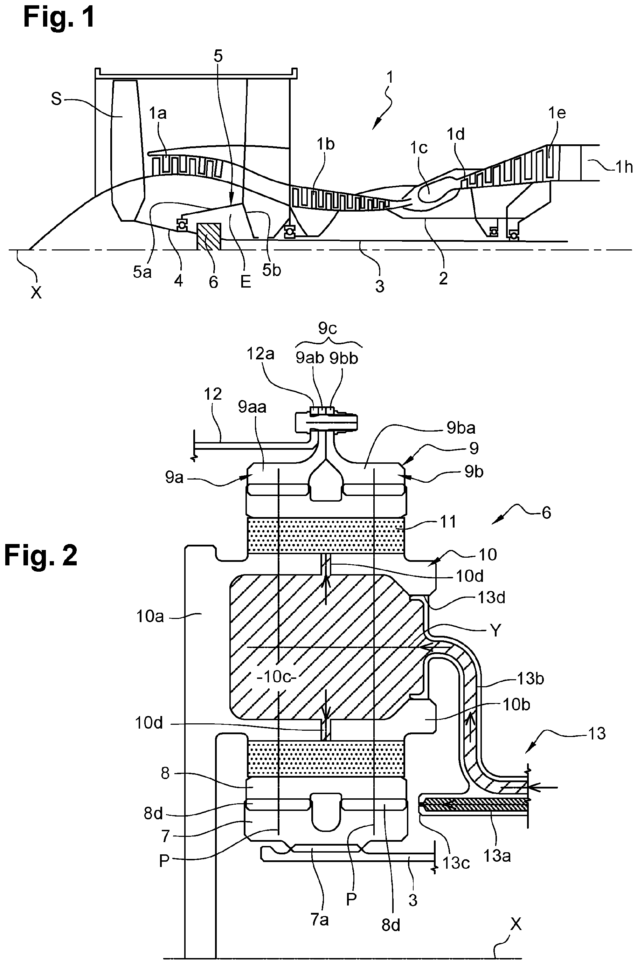

La figure 1 décrit une turbomachine 1 qui comporte, de manière classique, une soufflante S, un compresseur basse pression 1a, un compresseur haute pression 1b, une chambre annulaire de combustion 1c, une turbine haute pression 1d, une turbine basse pression 1e et une tuyère d'échappement 1h. Le compresseur haute pression 1b et la turbine haute pression 1d sont reliés par un arbre haute pression 2 et forment avec lui un corps haute pression (HP). Le compresseur basse pression 1a et la turbine basse pression 1e sont reliés par un arbre basse pression 3 et forment avec lui un corps basse pression (BP).

La soufflante S est entraînée par un arbre de soufflante 4 qui est entrainé à l'arbre BP 3 au moyen d'un réducteur 6. Ce réducteur 6 est généralement de type planétaire ou épicycloïdal.

La description qui suit concerne un réducteur du type épicycloïdal, dont le porte-satellites et le solaire sont mobiles en rotation, la couronne du réducteur étant fixe dans le repère du moteur.

Le réducteur 6 est positionné dans la partie amont de la turbomachine. Dans la présente demande, les expressions amont et aval font référence à l'écoulement général des gaz dans la turbomachine, le long de son axe d'allongement ou de rotation de ses rotors. Une structure fixe comportant schématiquement, ici, une partie amont 5a et une partie aval 5b qui compose le carter moteur ou stator 5 est agencée de manière à former une enceinte E entourant le réducteur 6. Cette enceinte E est ici fermée en amont par des joints au niveau d'un palier permettant la traversée de l'arbre de soufflante 4, et en aval par des joints au niveau de la traversée de l'arbre BP 3.

La figure 2 montre un réducteur épicycloïdal 6. En entrée, le réducteur 6 est relié à l'arbre BP 3, par exemple par l'intermédiaire de cannelures internes 7a. Ainsi, l'arbre BP 3 entraîne un pignon planétaire appelé le solaire 7. Classiquement, le solaire 7, dont l'axe de rotation est confondu avec celui de la turbomachine X, entraîne une série de pignons appelés satellites 8, qui sont équirépartis sur le même diamètre autour de l'axe de rotation X. Ce diamètre est égal au double de l'entraxe de fonctionnement entre le solaire 7 et les satellites 8. Le nombre de satellites 8 est généralement défini entre trois et sept pour ce type d'application.

L'ensemble des satellites 8 est maintenus par un châssis appelé porte-satellites 10. Chaque satellite 8 tourne autour de son propre axe Y, et engrène avec la couronne 9.

En sortie nous avons :
■ Dans cette configuration épicycloïdale, l'ensemble des satellites 8 entraine en rotation le porte-satellite 10 autour de l'axe X de la turbomachine. La couronne est fixée au carter moteur ou stator 5 via un porte-couronne 12 et le porte-satellites 10 est fixé à l'arbre de soufflante 4.
■ Dans une autre configuration planétaire, l'ensemble des satellites 8 est maintenu par un porte-satellites 10 qui est fixé au carter moteur ou stator 5. Chaque satellite entraine la couronne qui est rapportée à l'arbre de soufflante 4 via un porte-couronne 12.

Chaque satellite 8 est monté libre en rotation à l'aide d'un palier 11, par exemple de type roulement ou palier hydrodynamique. Chaque palier 11 est monté sur un des axes 10b du porte-satellites 10 et tous les axes sont positionnés les uns par rapport aux autres à l'aide d'un ou plusieurs châssis structurels 10a du porte-satellites 10. Il existe un nombre d'axes 10b et de paliers 11 égal au nombre de satellites. Pour des raisons de fonctionnement, de montage, de fabrication, de contrôle, de réparation ou de rechange, les axes 10b et le châssis 10a peuvent être séparés en plusieurs pièces.

Pour les mêmes raisons citées précédemment, la denture d'un réducteur peut être séparée en plusieurs hélices présentant chacun un plan médian P. Dans notre exemple, nous détaillons le fonctionnement d'un réducteur à plusieurs hélices avec une couronne séparée en deux demi-couronnes:
■ Une demi-couronne amont 9a constituée d'une jante 9aa et d'une demi-bride de fixation 9ab. Sur la jante 9aa se trouve l'hélice amont de la denture du réducteur. Cette hélice amont engrène avec celle du satellite 8 qui engrène avec celle du solaire 7.
■ Une demi-couronne aval 9b constituée d'une jante 9ba et d'une demi-bride de fixation 9bb. Sur la jante 9ba se trouve l'hélice aval de la denture du réducteur. Cette hélice aval engrène avec celle du satellite 8 qui engrène avec celle du solaire 7.

Si les largeurs d'hélice varient entre le solaire 7, les satellites 8 et la couronne 9 à cause des recouvrements de denture, elles sont toutes centrées sur un plan médian P pour les hélices amont et sur un autre plan médian P pour les hélices aval. Dans le cas d'un roulement à deux rangées de rouleaux, chaque rangée d'éléments roulants est aussi de préférence, mais pas nécessairement centrée sur deux plans médians.

La demi-bride de fixation 9ab de la couronne amont 9a et la demi-bride de fixation 9bb de la couronne aval 9b forment la bride de fixation 9c de la couronne. La couronne 9 est fixée à un porte-couronne en assemblant la bride de fixation 9c de la couronne et la bride de fixation 12a du porte-couronne à l'aide d'un montage boulonné par exemple.

Les flèches de la figure 2 décrivent l'acheminement de l'huile dans le réducteur 6. L'huile arrive dans le réducteur 6 depuis la partie stator 5 dans un distributeur 13 par différents moyens qui ne seront pas précisés dans cette vue car ils sont spécifiques à un ou plusieurs types d'architecture. Le distributeur 13 comprend des injecteurs 13a et des bras 13b. Les injecteurs 13a ont pour fonction de lubrifier les dentures et les bras 13b ont pour fonction de lubrifier les paliers. L'huile est amenée vers l'injecteur 13a pour ressortir par l'extrémité 13c afin de lubrifier les dentures. L'huile est également amenée vers le bras 13b et circule via la bouche d'alimentation 13d du palier. L'huile circule ensuite à travers l'axe dans une ou des zones tampons 10c pour ensuite ressortir par les orifices 10d afin de lubrifier les paliers des satellites.

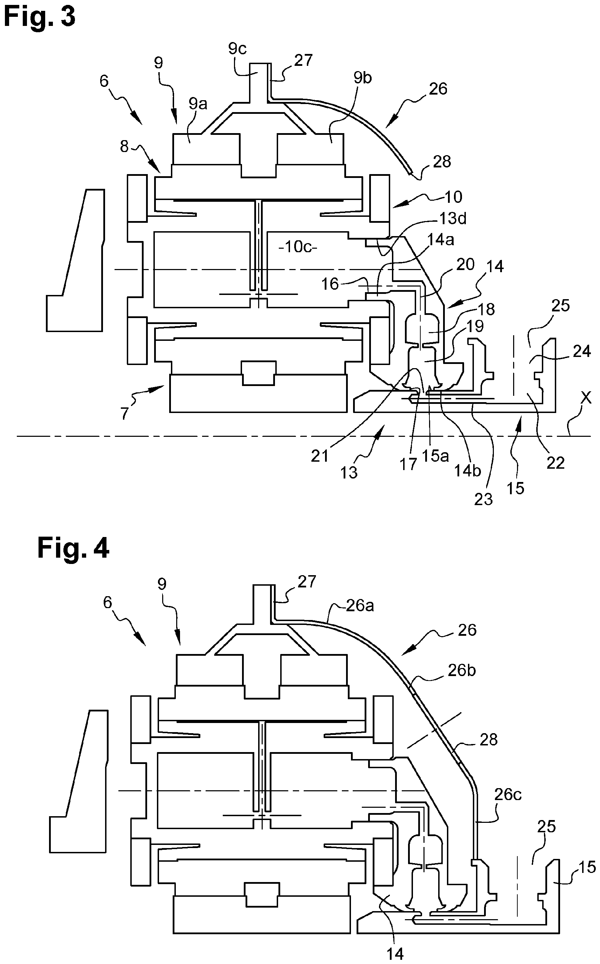

La figure 3 représente un exemple de réalisation plus concret d'un distributeur 13 d'huile qui comprend une partie rotorique 14 et une partie statorique 15.

La partie rotorique 14 est solidaire en rotation du porte-satellites 10 et a une forme générale annulaire autour de l'axe X. Cette partie 14 comprend des embouts 14a engagés dans les bouches d'alimentation 13d des paliers 11 des satellites 8 et comportant des orifices 16 de sortie d'huile en vue de l'alimentation en huile des zones tampons 10c.

La partie rotorique 14 comprend à sa périphérie interne une surface cylindrique interne 14b comportant des orifices 17 d'entrée d'huile. La partie rotorique 14 comprend en outre une chambre annulaire 18 qui est reliée d'une part par des premiers canaux 19 sensiblement radiaux aux orifices 17, et par des seconds canaux 20 sensiblement en L aux orifices 16.

La partie statorique 15 du distributeur 13 est solidaire d'un carter de la turbomachine qui n'est pas représenté. En pratique, la partie 15 est reliée au carter par un bras qui sert à éviter le rotulage du réducteur 6.

La partie statorique 15 a une forme générale annulaire autour de l'axe X et comprend un corps cylindrique engagé dans la partie rotorique 14 et comportant une surface cylindrique externe 15a comportant des orifices 21 de sortie d'huile. Les surfaces 14b et 15a coopèrent ensemble en fonctionnement pour garantir une étanchéité entre les circuits internes d'huile du distributeur 13.

Le circuit interne d'huile de la partie statorique 15 comprend une cavité annulaire 22 reliée d'une part à des conduites 23 s'étendant sensiblement axialement et reliant la cavité 22 aux orifices 21, et d'autre part à au moins un canal d'alimentation 24 s'étendant sensiblement radialement depuis la cavité 22. Le canal 24 débouche radialement vers l'extérieur sur une surface externe de la partie statorique 15 pour former un orifice 25 d'entrée d'huile.

Le réducteur 6 de la figure 3 comprend en outre un déflecteur annulaire d'huile 26. Ce déflecteur 26 est solidaire de la couronne 9 et fait partie du stator du réducteur car la couronne 9 est fixe. Le déflecteur 26 se présente sous la forme d'une virole annulaire de faible épaisseur. Le déflecteur 26 comprend un bord périphérique radialement externe qui est fixé à la couronne 9 et qui comprend en particulier une bride annulaire 27 de fixation à la bride 9c de la couronne. Le déflecteur 26 s'étend autour d'une demi-couronne 9b, ici aval, et comprend un bord périphérique radialement interne qui est libre.

En section axiale, le déflecteur 26 a une forme générale incurvée. Il est configuré pour capter l'huile centrifugée et expulsée radialement vers l'extérieur en fonctionnement et pour acheminer cette huile jusqu'à la bride 9c de la couronne 9 où cette huile pourra être évacuée et recyclée.

Cependant, comme évoqué dans ce qui précède, pour garantir l'étanchéité entre les parties rotorique 14 et statorique 15 du distributeur 13, il faut limiter voire empêcher tout déplacement relatif (en dehors de la rotation de la partie rotorique 14 autour de la partie statorique 15) et tout basculement relatif de ces parties.

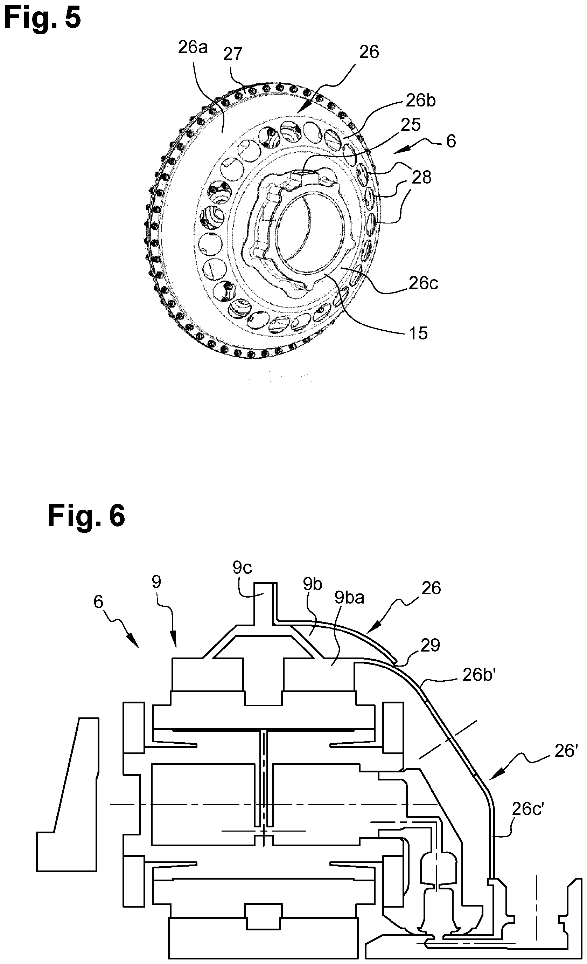

L'invention permet de remédier à ce problème et propose un premier mode de réalisation aux figures 4 et 5, dans lequel le déflecteur 26 est modifié pour lui affecter une fonction additionnelle de maintien de la partie statorique 15 du déflecteur 26. Le maintien de la partie statorique 15 par un élément de stator du réducteur, en l'occurrence la couronne 9, permet de limiter voire d'empêcher les déplacements et basculements relatifs précités.

Pour cela, le déflecteur 26 est allongé et s'étend désormais de la couronne 9 jusqu'à la partie statorique 15. Le déflecteur 26 comprend une partie périphérique radialement externe 26a similaire à celle la figure 3 (et comprend une bride 27 de fixation à la couronne 9), et comprend en plus deux parties supplémentaires à savoir une partie périphérique radialement interne 26c et une partie intermédiaire 26b (situées entre les parties 26a, 26c).

La partie intermédiaire 26b a une forme générale tronconique et comprend dans l'exemple représenté une rangée annulaire de lumières 28 traversantes servant à aménager la masse et la souplesse de la pièce 26. Ces lumières ne sont pas nécessaires au bon fonctionnement de la pièce 26.

La partie interne 26c s'étend sensiblement radialement par rapport à l'axe X et peut être fixée à la partie statorique 15 par tout moyen approprié et par exemple par soudage ou frettage. En variante, le déflecteur 26 pourrait être formé d'une seule pièce avec la partie statorique 15.

Dans l'exemple représenté où la partie statorique 15 est engagée dans la partie rotorique 14 depuis l'aval et son orifice d'entrée 25 est situé en aval du réducteur 6, la liaison du déflecteur 26 à cette partie statorique 15 peut être située juste en amont de cet orifice 25.

Dans la variante de réalisation de la figure 6, le déflecteur 26 de la technique antérieure est conservé et un déflecteur 26' additionnel équipe le réducteur 6.

Le déflecteur 26' comprend des parties 26b', 26c' similaires à celles du déflecteur 26 des figures 4 et 5. Le bord périphérique externe du déflecteur 26' n'est ici pas fixé à la bride de la couronne mais est reliée directement à une jante 9ba d'une des demi-couronnes, ici aval 9b. Le déflecteur 26' peut être fixé à la jante 9ba par soudage ou peut être formé d'une seule pièce avec cette jante, comme dans l'exemple représenté.

Le bord périphérique interne libre du déflecteur 26 entoure la périphérie externe du déflecteur 26' et est espacé du déflecteur 26' par un faible jeu radial 29.

Ainsi, la solution proposée par l'invention consiste à intégrer deux fonctions dans une même pièce ce qui rend la conception de l'architecture plus simple. En outre, le déflecteur est un moyen plus efficace que le bras précité de l'état de la technique pour éviter le rotulage du réducteur.

## Revendications

1. Réducteur mécanique (6) de turbomachine (1), en particulier d'aéronef, ce réducteur comportant :
- un solaire (7) ayant un axe de rotation (X),
- une couronne (9) qui s'étend autour du solaire (7) et qui est configurée pour être immobile en rotation autour dudit axe (X),
- des satellites (8) qui sont engrenés avec le solaire (7) et la couronne (9) et qui sont maintenus par un porte-satellites qui est configuré pour être mobile en rotation autour dudit axe (X),
- un distributeur (13) d'huile de lubrification qui comprend une partie statorique (15) immobile en rotation et une partie rotorique (14) solidaire en rotation dudit porte-satellites, et
- au moins un déflecteur (26, 26') d'huile annulaire qui est solidaire de la couronne (9),
**caractérisé en ce que** ladite partie statorique (15) du distributeur (13) est solidaire dudit déflecteur (26, 26').

2. Réducteur mécanique (6) selon la revendication 1, dans lequel le déflecteur (26) comprend une bride annulaire (27) de fixation à une bride annulaire (9c) de la couronne (9).

3. Réducteur mécanique (6) selon la revendication 2, dans lequel la couronne (9) comprend deux demi-couronnes (9a, 9b) comportant chacune une jante (9aa, 9ba) équipée d'une denture et une demi-bride de fixation (9ab, 9ab), les demi-brides de fixation étant fixées ensemble et à la bride (27) du déflecteur (26).

4. Réducteur mécanique (6) selon la revendication 1, dans lequel la couronne (9) comprend deux demi-couronnes (9a, 9b) comportant chacune une jante (9aa, 9ba) équipée d'une denture et une demi-bride (9ab, 9ab) de fixation, le déflecteur (26) étant fixée à la jante de l'une des demi-couronnes ou étant formée d'une seule pièce avec l'une des demi-couronnes.

5. Réducteur mécanique (6) selon la revendication 3 ou 4, dans lequel le déflecteur (26) comprend une partie périphérique externe (26a) s'étendant autour d'une demi-couronne (9b).

6. Réducteur mécanique (6) selon l'une des revendications précédentes, dans lequel le déflecteur (26) comprend une partie périphérique interne (26c) s'étendant principalement radialement audit axe (X).

7. Réducteur mécanique (6) selon l'une des revendications précédentes, dans lequel le déflecteur (26) comprend une rangée annulaire de lumières (28) traversantes.

8. Réducteur mécanique (6) selon la revendication précédente, dans lequel le déflecteur (26) comprend une portion tronconique (26b) dans laquelle sont formées lesdites lumières (28).

9. Réducteur mécanique (6) selon l'une des revendications précédentes, dans lequel ladite partie statorique (15) du distributeur (13) comprend :
- une surface cylindrique externe (15a) comportant des orifices (21) de sortie d'huile et configurée pour coopérer à étanchéité avec ladite partie rotorique (14) du distributeur (13), et
- un circuit interne d'huile comportant une cavité (22) annulaire reliée d'une part à des conduites (23) s'étendant principalement axialement et reliant ladite cavité auxdits orifices (21), et d'autre part à au moins un canal d'alimentation (24) s'étendant principalement radialement depuis ladite cavité (22).

10. Turbomachine (1), en particulier d'aéronef, comportant un réducteur mécanique (6) selon l'une des revendications précédentes.

## Patentansprüche

1. Mechanisches Untersetzungsgetriebe (6) für Turbomaschine (1), insbesondere eines Luftfahrzeugs, wobei dieses Untersetzungsgetriebe beinhaltet:
- ein Sonnenrad (7) mit einer Rotationsachse (X),
- einen Kranz (9), der sich um das Sonnenrad (7) herum erstreckt, und der konfiguriert ist, dass sie in Drehung um die Achse (X) unbeweglich ist,
- Planetenräder (8), die mit dem Sonnenrad (7) und dem Kranz (9) in Eingriff stehen, und die durch einen Planetenradträger gehalten werden, der konfiguriert ist, um um die Achse (X) herum rotationsbeweglich zu sein,
- einen Verteiler (13) von Schmieröl, der einen statorischen Teil (15) umfasst, der rotationsfest ist, und einen rotorischen Teil (14), der mit dem Planetenradträger rotationsstarr ist, und
- mindestens einen ringförmigen Öldeflektor (26, 26'), der mit dem Kranz (9) einstückig ist,
**dadurch gekennzeichnet, dass** der statorische Teil (15) des Verteilers (13) mit dem Deflektor (26, 26') einstückig ist.

2. Mechanisches Untersetzungsgetriebe (6) nach Anspruch 1, wobei der Deflektor (26) einen ringförmigen Flansch (27) zur Befestigung an einen ringförmigen Flansch (9c) des Kranzes (9) umfasst.

3. Mechanisches Untersetzungsgetriebe (6) nach Anspruch 2, wobei der Kranz (9) zwei Halbkränze (9a, 9b) umfasst, die jeweils einen Radkranz (9aa, 9ba) beinhalten, der mit einer Zahnung und einem Befestigungshalbflansch (9ab, 9ab) ausgestattet ist, wobei die Befestigungshalbflansche zusammen und an den Flansch (27) des Deflektors (26) befestigt sind.

4. Mechanisches Untersetzungsgetriebe (6) nach Anspruch 1, wobei der Kranz (9) zwei Halbkränze (9a, 9b) umfasst, die jeweils einen Radkranz (9aa, 9ba) beinhalten, der mit einer Zahnung und einem Befestigungshalbflansch (9ab, 9ab) ausgestattet ist, wobei der Deflektor (26) an den Radkranz eines der Halbkränze befestigt ist oder aus einem einzigen Stück mit einem der Halbkränze gebildet ist.

5. Mechanisches Untersetzungsgetriebe (6) nach Anspruch 3 oder 4, wobei der Deflektor (26) einen äußeren peripheren Teil (26a) umfasst, der sich um einen Halbkranz (9b) herum erstreckt.

6. Mechanisches Untersetzungsgetriebe (6) nach einem der vorstehenden Ansprüche, wobei der Deflektor (26) einen inneren peripheren Teil (26c) umfasst, der sich hauptsächlich radial um die Achse (X) herum erstreckt.

7. Mechanisches Untersetzungsgetriebe (6) nach einem der vorstehenden Ansprüche, wobei der Deflektor (26) eine ringförmige Reihe von durchgehenden Öffnungen (28) umfasst.

8. Mechanisches Untersetzungsgetriebe (6) nach dem vorstehenden Anspruch, wobei der Deflektor (26) einen kegelstumpfförmigen Abschnitt (26b) umfasst, in dem die Öffnungen (28) gebildet sind.

9. Mechanisches Untersetzungsgetriebe (6) nach einem der vorstehenden Ansprüche, wobei der statorische Teil (15) des Verteilers (13) umfasst:
- eine äußere zylindrische Oberfläche (15a), beinhaltend Ölausgangslöcher (21) und konfiguriert, um Dichtend mit dem rotorischen Teil (14) des Verteilers (13) zusammenzuwirken, und
- ein interner Ölkreislauf, der einen ringförmigen Hohlraum (22) beinhaltet, der einerseits mit Leitungen (23) verbunden ist, die sich hauptsächlich axial erstrecken und den Hohlraum mit den Löchern (21) verbindet, und andererseits mindestens einem Versorgungskanal (24), der sich hauptsächlich radial von dem Hohlraum (22) erstreckt.

10. Turbomaschine (1), insbesondere eines Luftfahrzeugs, beinhaltend einem Mechanisches Untersetzungsgetriebe (6) nach einem der vorstehenden Ansprüche.

## Claims

1. Turbine engine (1) mechanical reduction gear (6), in particular of an aircraft, the reduction gear comprising:
- a sun gear (7) having an axis of rotation (X),
- a ring gear (9) which extends around the sun gear (7) and which is configured to be immobile in rotation about said axis (X),
- planetary gears (8) which are meshed with the sun gear (7) and the ring gear (9) and which are supported by a planetary carrier which is configured to be mobile in rotation about said axis (X),
- a lubrication oil distributor (13) which comprises a stator portion (15) immobile in rotation and a rotating integral rotor portion (14) of said planetary carrier, and
- at least one annular oil deflector (26, 26') which is integral with the ring gear (9),
**characterised in that** said stator portion (15) of the distributor (13) is integral with said deflector (26, 26').

2. Mechanical reduction gear (6) according to claim 1, wherein the deflector (26) comprises an annular flange (27) for mounting to an annular flange (9c) of the ring gear (9).

3. Mechanical reduction gear (6) according to claim 2, wherein the ring gear (9) comprises two half-ring gears (9a, 9b) each comprising a rim (9aa, 9ba) equipped with a gearing and a mounting half-flange (9ab, 9ab), the mounting half-flanges being fixed together and to the flange (27) of the deflector (26).

4. Mechanical reduction gear (6) according to claim 1, wherein the ring gear (9) comprises two half-ring gears (9a, 9b) each comprising a rim (9aa, 9ba) equipped with a gearing and a mounting half-flange (9ab, 9ab), the deflector (26) being fixed to the rim of one of the half-ring gears or being formed as a single part with one of the half-ring gears.

5. Mechanical reduction gear (6) according to claim 3 or 4, wherein the deflector (26) comprises an outer peripheral portion (26a) extending around a half-ring gear (9b).

6. Mechanical reduction gear (6) according to one of the preceding claims, wherein the deflector (26) comprises an inner peripheral portion (26c) extending generally radially to said axis (X).

7. Mechanical reduction gear (6) according to one of the preceding claims, wherein the deflector (26) comprises an annular row of through holes (28).

8. Mechanical reduction gear (6) according to the preceding claim, wherein the deflector (26) comprises a truncated portion (26b) wherein said holes (28) are formed.

9. Mechanical reduction gear (6) according to one of the preceding claims, wherein said stator portion (15) of the distributor (13) comprises:
- an outer cylindrical surface (15a) comprising oil outlet orifices (21) and configured to engage in a sealing manner with said rotor portion (14) of the distributor (13), and
- an inner oil circuit comprising an annular cavity (22) connected, on the one hand, to lines (23) extending generally axially and connecting said cavity to said orifices (21), and on the other hand, to at least one supply channel (24) extending generally radially from said cavity (22).

10. Turbine engine (1), in particular of an aircraft, comprising a mechanical reduction gear (6) according to one of the preceding claims.
